# EUROPEAN PATENT APPLICATION

(11) **EP 4 783 258 A1**
(43) Date of publication of application: **29.07.2026**
(21) Application number: 24936188.2
(22) Date of filing: 08.11.2024
(51) Int. Cl.: H01M 4/36, H01M 4/62, H01M 4/13, H01M 4/139, H01M 10/0525, H01M 10/0568, H01M 10/058

(54) **POSITIVE ELECTRODE MATERIAL AND PREPARATION METHOD THEREFOR, POSITIVE ELECTRODE SLURRY, POSITIVE ELECTRODE SHEET, AND LITHIUM ION BATTERY AND PREPARATION METHOD THEREFOR**

(30) Priority: 12.09.2024 CN 202411284723
(71) Applicant: HUIZHOU EVE POWER CO., LTD, Huizhou, Guangdong 516039 (CN); Eve Power Co., Ltd., Jingmen, Hubei 448000 (CN)
(72) Inventor: LI, Si, Huizhou, Guangdong 516039 (CN); HU, Qi, Huizhou, Guangdong 516039 (CN); LIU, Ziwen, Huizhou, Guangdong 516039 (CN); ZENG, Hanmin, Huizhou, Guangdong 516039 (CN); HE, Wei, Huizhou, Guangdong 516039 (CN)
(74) Representative: Zhu, Puxing
(86) International application number: PCT/CN2024/130796
(87) International publication number: WO 2026/056082

(57) **Abstract**

The present application provides a positive electrode material and a preparation method thereof, a positive electrode slurry, a positive electrode plate, a lithium ion battery and a preparation method thereof. The positive electrode material is applied to a battery. The battery comprises an electrolyte, the electrolyte comprises lithium hexafluorophosphate and an organic solvent, the positive electrode material comprises a positive electrode active substance and lithium carbonate, the lithium carbonate is coated on the surface of the positive electrode active substance, and a mass ratio of the positive electrode active substance to the lithium carbonate is 1:(0.001-0.03).

## Description

The present application claims priority to the Chinese patent application No. 202411284723.9 filed with Chinese Patent Office on September 12, 2024, the entire disclosure of which are incorporated by reference into the present application.

### TECHNICAL FIELD

The present application relates to the field of battery technology, and specifically to a positive electrode material and a preparation method thereof, a positive electrode slurry, a positive electrode plate, a lithium ion battery and a preparation method thereof.

### BACKGROUND

The energy density of a lithium ion battery is mainly determined by the specific capacity and electrode potential of the positive and negative electrode materials, but exertion of its performance is closely related to the properties of the electrode/electrolyte interface. In order to improve the performance of the lithium ion battery, the electrolyte additive is often used to improve the properties of the electrode/electrolyte interface. As a commonly used electrolyte additive, lithium difluorophosphate may be oxidized and decomposed on the surface of the positive electrode to form a layer of thermodynamically and mechanically stable solid electrolyte film, which can not only inhibit the oxidative decomposition of the electrolyte, but also effectively reduce the impedance of the electrode/electrolyte interface and improve the cycle stability.

### SUMMARY

However, due to the limited solubility of lithium difluorophosphate in the electrolyte, adding too much will lead to a sharp increase in the viscosity of the electrolyte, thereby reducing its effect in performance improvement.

The present application provides a positive electrode material applied in a battery. The battery includes an electrolyte, the electrolyte includes lithium hexafluorophosphate, the positive electrode material includes a positive electrode active substance and lithium carbonate, the lithium carbonate is coated on the surface of the positive electrode active substance, and a mass ratio of the positive electrode active substance to the lithium carbonate is 1:( 0.001-0.03).

The present application also provides a preparation method for a positive electrode material, the positive electrode material is applied in a battery, the battery includes an electrolyte, the electrolyte includes lithium hexafluorophosphate. The preparation method includes the following steps:

Providing a positive electrode active substance and lithium carbonate, and coating the lithium carbonate on the surface of the positive electrode active substance to obtain a positive electrode material.

The present application also provides a positive electrode slurry, which is applied to a battery. The battery includes an electrolyte, and the electrolyte includes lithium hexafluorophosphate. The positive electrode slurry includes:
The above-described positive electrode material or the positive electrode material prepared by the preparation method for the positive electrode material, as well as a binder and a conductive agent.

The present application also provides a positive electrode plate, which is applied in a battery, the battery includes an electrolyte, the electrolyte includes lithium hexafluorophosphate, the positive electrode plate includes the above-described positive electrode slurry.

The present application also provides a lithium ion battery, including: the above-described positive electrode plate and an electrolyte, the electrolyte includes lithium hexafluorophosphate and an organic solvent.

The present application also provides a preparation method for a lithium ion battery, including the following steps:
Providing a lithium ion battery preform and an electrolyte, the lithium ion battery preform includes a packaged negative electrode plate, the above-described positive electrode plate, a separator and a battery shell; injecting the electrolyte into the lithium ion battery preform to obtain the lithium ion battery after standing, the electrolyte includes lithium hexafluorophosphate and an organic solvent.

### Beneficial Effect

As for the positive electrode material provided by the present application, by coating a layer of lithium carbonate on the surface of the positive electrode active substance, the lithium carbonate may react with the lithium hexafluorophosphate in the electrolyte to generate a coating layer of lithium difluorophosphate in situ on the surface of the positive electrode active substance, thereby effectively increasing the addition amount of lithium difluorophosphate in the battery, which in turn improves the performance of the battery; during the first charging process, the lithium difluorophosphate on the surface of the positive electrode active substance may be oxidized and decomposed to generate a layer of relatively stable solid electrolyte film, thereby inhibiting the oxidative decomposition of the electrolyte on the positive electrode surface, while effectively reducing the impedance of the electrode/electrolyte interface, which in turn improves the cycle stability of the battery; by controlling the mass ratio of the positive electrode active substance to lithium carbonate, the lithium carbonate may be effectively coated on the positive electrode active substance, thereby effectively forming a coating layer of lithium difluorophosphate while making the battery cell have a higher energy density.

### DESCRIPTION OF THE DRAWINGS

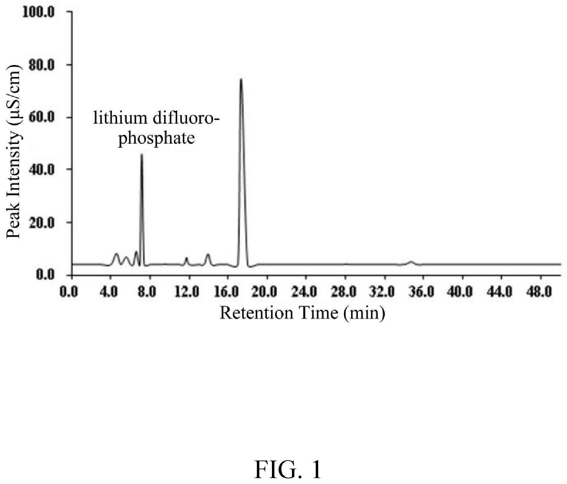

FIG. 1 is an ion chromatography test result of the immersion liquid of the positive electrode plate after high-temperature standing in Embodiment 1 of the present application.

### DESCRIPTION OF THE EMBODIMENTS

The technical solution of the present application is as follows:
In a first aspect, an embodiment of the present application provides a positive electrode material for use in a battery, the battery includes an electrolyte, the electrolyte includes lithium hexafluorophosphate, the positive electrode material includes a positive electrode active substance and lithium carbonate, the lithium carbonate is coated on the surface of the positive electrode active substance, and the mass ratio of the positive electrode active substance to the lithium carbonate is 1:(0.001-0.03) .

In the present application, by coating a layer of lithium carbonate on the surface of the positive electrode active substance, lithium carbonate may react with the lithium hexafluorophosphate in the electrolyte to generate a coating layer of lithium difluorophosphate coating in situ on the surface of the positive electrode active substance, thereby effectively increasing the addition amount of lithium difluorophosphate in the battery, which in turn can improve the performance of the battery; during the first charging process, the lithium difluorophosphate on the surface of the positive electrode active substance may be oxidized and decomposed to generate a layer of relatively stable solid electrolyte film, thereby inhibiting the oxidative decomposition of the electrolyte on the positive electrode surface, while it is possible to effectively reduce impedance of the electrode/electrolyte interface, thereby improving the cycle stability of the battery.

In the present application, the mass ratio of the positive electrode active substance to the lithium carbonate is 1:(0.001-0.03), for example, it may be 1: 0.001, 1: 0.003, 1:0.005, 1: 0.007, 1: 0.009, 1: 0.011, 1: 0.013, 1: 0.015, 1:0.017, 1: 0.019, 1: 0.021, 1: 0.023, 1: 0.025, 1:0.027, 1: 0.029, etc. Within this range, lithium carbonate may be effectively coated with the positive electrode active substance, thereby effectively forming a coating layer of lithium difluorophosphate, while making the battery cell have a higher energy density.

In some embodiments, the molar ratio of lithium carbonate to lithium hexafluorophosphate is (0.001-0.1):1, for example, it may be 0.001:1, 0.005:1, 0.007:1, 0.01:1, 0.02:1, 0.03:1, 0.04:1, 0.05:1, 0.06:1, 0.07:1, 0.08:1, 0.09:1, 0.1:1, etc.

In the present application, by controlling the amount of lithium carbonate, the lithium carbonate may be fully reacted to generate lithium difluorophosphate, thereby forming a coating layer of lithium difluorophosphate, and meanwhile, the amount of lithium hexafluorophosphate remaining in the electrolyte may be controlled, thereby effectively reducing the internal resistance of the battery, which may in turn the cycle stability of the battery. If the usage amount of lithium carbonate is too much, more lithium difluorophosphate will be generated, which will lead to a decrease in the concentration of lithium hexafluorophosphate in the electrolyte , thereby reducing the conductivity of the electrolyte, increasing the internal resistance of the battery, and then causing a decrease in the cycle performance; if the usage amount of lithium carbonate is too much, there may be unreacted lithium carbonate, which will cause an increase in the internal resistance of the battery and a decrease in the cycle performance.

In some embodiments, the surface basicity of the positive electrode material is 80 µmol/g ~ 2000 µmol/g, for example, it may be 100 µmol/g, 300 µmol/g, 500 µmol/g, 700 µmol/g, 900 µmol/g, 1100 µmol/ g, 1300 µmol/g, 1500 µmol/g, 1700 µmol/g, 1900 µmol/g, etc. Within this range, the content of lithium carbonate on the surface of the positive electrode active substance may be controlled.

In some embodiments, the volume fraction of particles with an average particle size of 0.1 µm - 0.3 µm in lithium carbonate is at least 40 %, for example, the average particle size may be 0.1 µm, 0.12 µm, 0.15 µm, 0.17 µm, 0.2 µm, 0.22 µm, 0.25 µm, 0.27 µm, 0.3 µm, etc., and the volume fraction may be 40%, 50%, 60%, 70%, 80%, 90%, 100%, etc. In this way, the particle size of lithium carbonate may be made smaller, so that lithium carbonate may be better coated on the surface of the active substance.

In some embodiments, the positive electrode active substance includes at least one of lithium cobaltate, nickel cobalt lithium manganate, nickel cobalt lithium aluminate, nickel cobalt manganese lithium aluminate, lithium manganate, lithium nickelate, lithium iron phosphate, lithium manganese iron phosphate, and lithium-rich manganese.

In a second aspect, an embodiment of the present application provides a preparation method for a positive electrode material, the positive electrode material is applied to a battery, the battery includes an electrolyte, and the electrolyte includes lithium hexafluorophosphate, the preparation method includes the following steps:

Providing a positive electrode active substance and lithium carbonate, and coating the lithium carbonate on the surface of the positive electrode active substance to obtain the positive electrode material.

The preparation method in the present application is simple to operate, compatible with the existing battery preparation processes, and has no special environmental control requirements.

In some embodiments, coating lithium carbonate on the surface of the positive electrode active substance includes:
Ball-milling the lithium carbonate and the positive electrode active substance.

In the present application, coating is performed by ball milling, which is simple to operate and easy to implement.

It may be understood that the particle size of lithium carbonate particle is smaller than that of the positive electrode active substance. After ball milling, lithium carbonate may be coated on the surface of the positive electrode active substance.

In some embodiments, the time for ball milling is 2h-8h, for example, it may be 2h, 3h, 4h, 5h, 6h, 7h, 8h, etc., and the rotation speed is 60r/min-120r/min, for example, it may be 60r/min, 70r/min, 80r/min, 90r/min, 100r/min, 110r/min, 120r/min, etc.

In some embodiments, ball milling is performed under an environmental condition at which a dew point temperature ≤ -50 °C, for example, it may be -50 °C, -55 °C, -60 °C, -65 °C, - 70 °C, -75 °C, etc. In this way, the amount of moisture absorbed by the positive electrode active substance from the environment may be controlled.

In a third aspect, an embodiment of the present application provides a positive electrode slurry, the positive electrode slurry is applied to a battery. The battery includes an electrolyte, and the electrolyte includes lithium hexafluorophosphate. The positive electrode slurry includes the above-described positive electrode material, a binder and a conductive agent.

In some embodiments, the positive electrode slurry further includes a dispersant, and the mass percentage of the positive electrode material, the binder, the conductive agent and the dispersant is (94%-98%): (0.8% -5%): (0.5% -5%): (0.1%-0.5%). Within this range, the positive electrode plate may be allowed to have good processing performance and conductivity performance, while having a higher energy density.

In a fourth aspect, an embodiment of the present application provides a preparation method for a positive electrode slurry, the positive electrode slurry is applied to a battery, the battery includes an electrolyte, the electrolyte includes lithium hexafluorophosphate, and the preparation method comprises the following steps:
Providing the above-described positive electrode material, a binder, a conductive agent, a dispersant and an organic solvent, and mixing the pretreated positive electrode active substance, the binder, the conductive agent and the dispersant in the organic solvent to obtain a positive electrode slurry.

In some embodiments, the organic solvent includes one or more of ethylene carbonate, methylpropyl carbonate, propylene carbonate, butylene carbonate, dimethyl carbonate, diethyl carbonate, or ethyl methyl carbonate.

In a fifth aspect, an embodiment of the present application provides a positive electrode plate, which is applied to a battery. The battery includes an electrolyte, and the electrolyte includes lithium hexafluorophosphate. The positive electrode plate includes the above-described positive electrode slurry.

In a sixth aspect, an embodiment of the present application provides a preparation method for a positive electrode plate, including the following steps:
Providing a current collector and the above-described positive electrode slurry, disposing the positive electrode slurry on the current collector, and drying to obtain the positive electrode plate.

In some embodiments, disposing the positive electrode slurry on the current collector includes: coating the positive electrode slurry on the current collector.

In some embodiments, the environment for drying is a vacuum environment, the temperature for drying is 60 °C -150 °C, for example, it may be 60 °C, 70 °C, 80 °C, 90 °C, 100°C, 110 °C, 120 °C, 130 °C, 140 °C, 150 °C, etc., and the time for drying is 12h-24h, for example, it may be 12h, 13h, 14h, 15h, 16h, 17h, 18h, 19h, 20h, 21h, 22h, 23h, 24h, etc.

In a seventh aspect, an embodiment of the present application provides a lithium ion battery, including:

The above-described positive electrode;
The electrolyte, the electrolyte comprises lithium hexafluorophosphate and an organic solvent.

In some embodiments, the organic solvent includes one or more of ethylene carbonate, methylpropyl carbonate, propylene carbonate, butylene carbonate, dimethyl carbonate, diethyl carbonate, or ethyl methyl carbonate.

In some embodiments, the molar ratio of lithium carbonate to lithium hexafluorophosphate is (0.001-0.1):1, for example, it may be 0.001:1, 0.005:1, 0.007:1, 0.01:1, 0.02:1, 0.03:1, 0.04:1, 0.05:1, 0.06:1, 0.07:1, 0.08:1, 0.09:1, 0.1:1, etc.

In an eighth aspect, an embodiment of the present application provides a preparation method for a lithium ion battery, including the following steps:
Providing a lithium ion battery preform and an electrolyte, the lithium ion battery preform includes a packaged negative electrode plate, the above described positive electrode plate, a separator and a battery shell; injecting the electrolyte into the lithium ion battery preform to obtain the lithium ion battery after standing, the electrolyte comprises lithium hexafluorophosphate and an organic solvent.

In the present application, during the standing process, the lithium carbonate on the surface of the positive electrode active substance reacts with the lithium hexafluorophosphate in the electrolyte, thereby in-situ generating a coating layer of lithium difluorophosphate on the surface of the positive electrode active substance.

In some embodiments, the temperature for standing is 40 °C-80°C, for example, it may 40 °C, 45 °C, 50 °C, 55 °C, 60 °C, 65 °C, 70 °C, 75 °C, 80 °C, etc., and the standing time is 12h-96h, for example, it may be 12h, 20h, 30h, 40h, 50h, 60h, 70h, 80h, 90h, 96h, etc. During the standing process at this temperature, lithium carbonate on the surface of the positive electrode active substance may fully react with lithium hexafluorophosphate in the electrolyte, and a coating layer of lithium difluorophosphate is generated in situ on the surface of the positive electrode active substance. If the temperature is too high and the standing time is too long, the electrolyte is prone to decomposition.

### Embodiment 1

A preparation method for a positive electrode slurry includes the following steps:
At an environment condition with a dew point of -55 °C, mixing and ball-milling nickel cobalt lithium manganate and lithium carbonate (a particle size of 0.05 µm-0.5 µm, of which the volume fraction of 0.1 µm - 0.3 µm particles is 50%) at a mass ratio of 1:0.003 for 4 h with a rotation speed of 80 r/ min to obtain a pretreated positive electrode active substance;
mixing the pretreated positive electrode active substance, polyvinylidene fluoride (PVDF), conductive carbon black (SP) and polyacrylic acid in N-methylpyrrolidone (NMP) at a mass ratio of 96.5: 2.0: 1.3: 0.2 to obtain a positive electrode slurry.

A preparation method for a positive electrode plate includes the following steps:
Coating the above-described positive electrode slurry on a current collector aluminum foil and drying it under vacuum at 110 °C for 18 h to obtain a positive electrode plate (single-sided surface density of 200 g /m²).

A preparation method for a lithium ion battery includes the following steps:
Rolling, cutting, stacking and packaging the above-described positive electrode plate, the graphite negative electrode plate, the PE separator and the battery shell to obtain a lithium ion battery preform;
Injecting the electrolyte (including lithium hexafluorophosphate and an organic solvent consisted of ethylene carbonate, dimethyl carbonate, diethyl carbonate, and ethyl methyl carbonate) into the lithium ion battery preform, and standing at 60°C for 24 hours to allow lithium carbonate on the surface of the positive electrode active substance to react with lithium hexafluorophosphate in the electrolyte to generate lithium difluorophosphate; thereafter obtaining the lithium ion battery through chemical formation and volume separation, in which the molar ratio of lithium hexafluorophosphate to lithium carbonate is 1: 0.06 .

### Embodiment 2

The present embodiment is substantially the same as Embodiment 1, except that the mass ratio of nickel cobalt lithium manganate to lithium carbonate in the present embodiment is 1:0.01.

### Embodiment 3

The present embodiment is substantially the same as Embodiment 1, except that in the present embodiment, nickel cobalt lithium manganate is replaced by lithium iron phosphate, and the mass ratio of lithium iron phosphate to lithium carbonate is 1: 0.008.

### Embodiment 4

The present embodiment is substantially the same as Embodiment 1, except that in the present embodiment, nickel cobalt lithium manganate is replaced by lithium iron phosphate, and the mass ratio of lithium iron phosphate to lithium carbonate is 1: 0.012.

### Embodiment 5

The present embodiment is substantially the same as Embodiment 1, except that the volume fraction of particles with a particle size of 0.1 µm - 0.3 µm in the lithium carbonate in the present embodiment is 40%.

### Embodiment 6

The present embodiment is substantially the same as Embodiment 1, except that the volume fraction of particles with a particle size of 0.1 µm - 0.3 µm in the lithium carbonate in the present embodiment is 60%.

### Embodiment 7

The present embodiment is substantially the same as Embodiment 1, except that the mass ratio of the pretreated positive electrode active substance, PVDF, SP and polyacrylic acid in the present embodiment is 98: 0.8: 0.8: 0.4.

### Embodiment 8

The present embodiment is substantially the same as Embodiment 1, except that the mass ratio of the pretreated positive electrode active substance, PVDF, SP and polyacrylic acid in the present embodiment is 94:3:2.5:0.5.

### Embodiment 9

The present embodiment is substantially the same as embodiment 1, except that the ball milling time in the present embodiment is 2 h.

### Embodiment 10

The present embodiment is substantially the same as Embodiment 1, except that the ball milling time in the present embodiment is 8 h.

### Embodiment 11

The present embodiment is substantially the same as Embodiment 1, except that the standing temperature in the present embodiment is 40 °C.

### Embodiment 12

The present embodiment is substantially the same as Embodiment 1, except that the standing temperature in the present embodiment is 80 °C.

### Embodiment 13

The present embodiment is substantially the same as Embodiment 1, except that the standing time in the present embodiment is 12 h.

### Embodiment 14

The present embodiment is substantially the same as Embodiment 1, except that the standing time in the present embodiment is 96 h.

### Embodiment 15

The present embodiment is substantially the same as Embodiment 1, except that the ratio of lithium hexafluorophosphate to lithium carbonate in the present embodiment is 1: 0.1.

### Embodiment 16

The present embodiment is substantially the same as Embodiment 1, except that the ratio of lithium hexafluorophosphate to lithium carbonate in the present embodiment is 1: 0.001.

### Embodiment 17

The present comparative example is substantially the same as Embodiment 1, except that the molar ratio of lithium hexafluorophosphate to lithium carbonate is 1: 0.3.

### Comparative Embodiment 1

The present Comparative Embodiment is substantially the same as Embodiment 1, except that lithium carbonate is not used in the present Comparative Embodiment.

### Comparative Embodiment 2

The present Comparative Embodiment is substantially the same as Embodiment 3, except that lithium carbonate is not used in the present Comparative Embodiment.

### Comparative Embodiment 3

The present Comparative Embodiment is substantially the same as Embodiment 2, except that lithium carbonate is not used in the present comparative Embodiment, the mass ratio of lithium hexafluorophosphate to lithium difluorophosphate in the electrolyte is 97:3, and the mass of lithium difluorophosphate is consistent with the theoretical production amount of lithium difluorophosphate in Embodiment 2.

### Comparative Embodiment 4

The present Comparative Embodiment is substantially the same as Embodiment 1, except that the mass ratio of lithium nickel cobalt manganese oxide to lithium carbonate in the present Comparative Embodiment is 1: 0.1.

### Test Embodiment:

Surface alkalinity test method: Under a vacuum degree of 0.01 Pa, the pretreated positive electrode active substance (the positive electrode active substance coated with lithium carbonate on the surface) is heated to 1023K and heat treated for 2 hours to fully decompose Li₂CO₃ on the surface of the material to generate Li₂O; then at 423K, CO₂ is used as the acidic adsorption molecule, and a heat flow micro-adsorption calorimeter is used to test the adsorption amount of CO₂, and the adsorption amount is recorded as the surface alkalinity.

Ion chromatography test method: a 2cm*2cm size positive electrode plate after medium standing was taken, placed in 10ml acetonitrile to immerse for 4 hours, the immersion liquid was filtered, 1ml of the above filtrate was taken and diluted 10 times, 5ml of the dilution liquid was taken and was tested with ion chromatography to obtain the peak intensity at the characteristic peak of 7~9 min. The detection conditions of ion chromatography are as follows: the chromatographic column is an anion chromatographic column, the mobile phase is sodium carbonate solution of 3.6mmol /L (the solvent is acetonitrile aqueous solution with a volume concentration of 40%), and the detector is a conductivity detector.

Discharge DC resistance (DCR) test method of the lithium ion battery: the battery was charged to 100 % SOC at 1/3 at 25°C, then discharged to 50 % SOC at 1/3, then stood for 60 minutes, the voltage V₁ was recorded at the beginning of discharge, then discharged at 2C current I for 10s and the sampling voltage V₂ was recorded at the end of discharge. The discharge DCR of battery= (V₂ -V₁)/I.

Cycle performance test method of lithium ion battery: At 45 °C, the lithium ion battery is charged and discharged 500 times at a constant current at a rate of 1.0C (nominal capacity). The capacity retention rate after 500 cycles (C%) = (discharge capacity of the 500th cycle/first discharge capacity) × 100%.

**[Table 1_sm_0001]**

| The test data is shown in Table 1: | Surface basicity (µmol/g) | Characteristic peak intensity (µS/cm) | 25°C discharge DCR of battery (mΩ) | 500 week capacity retention rate of battery |
|---|---|---|---|---|
| Embodiment 1 | 253 | 46 | 48 | 92.1% |
| Embodiment 2 | 687 | 135 | 44 | 93.4% |
| Embodiment 3 | 618 | 106 | 54 | 90.4% |
| Embodiment 4 | 834 | 152 | 51 | 91.7% |
| Embodiment 5 | 249 | 42 | 50 | 91.8% |
| Embodiment 6 | 255 | 48 | 47 | 92.3% |
| Embodiment 7 | 252 | 45 | 49 | 91.9% |
| Embodiment 8 | 251 | 46 | 47 | 91.8% |
| Embodiment 9 | 249 | 38 | 52 | 91.2% |
| Embodiment 10 | 255 | 41 | 51 | 91.5% |
| Embodiment 11 | 251 | 32 | 50 | 91.6 % |
| Embodiment 12 | 252 | 51 | 46 | 92.5% |
| Embodiment 13 | 253 | 36 | 49 | 91.7% |
| Embodiment 14 | 252 | 54 | 45 | 92.6 % |
| Embodiment 15 | 249 | 47 | 50 | 91.3% |
| Embodiment 16 | 251 | 45 | 45 | 92.6% |
| Embodiment 17 | 248 | 44 | 76 | 74.3% |
| Comparative Embodiment 1 | 54 | / | 55 | 81.2% |
| Comparative Embodiment 2 | 32 | / | 62 | 80.5% |
| Comparative Embodiment 3 | 35 | / | 60 | 85.6% |
| Comparative Embodiment 4 | 6435 | 589 | 94 | 70.1% |

It may be seen from Table 1 that:
Comparing Embodiment 2 with Embodiment 1 and comparing Embodiment 4 with Embodiment 3, the mass of lithium carbonate increases, the measured surface alkalinity increases, the characteristic peak intensity increases, the battery resistance decreases, and the capacity retention rate increases. Comparing Embodiment 5 and Embodiment 6 with Embodiment 1, the volume fraction of particles with an average particle size of 0.1 µm - 0.3 µm in lithium carbonate increases, the measured surface alkalinity increases, the characteristic peak intensity increases, the battery resistance decreases, and the capacity retention rate increases. Comparing Embodiment 11 and Embodiment 12 with Embodiment 1, the standing temperature increases, the measured battery resistance decreases, and the capacity retention rate increases. Comparing Embodiment 13 and Embodiment 14 with Embodiment 1, the standing time increases, the battery resistance decreases, and the capacity retention rate increases. Comparing Embodiment 15, Embodiment 16 and Embodiment 17 with Embodiment 1, the mass of lithium carbonate increases, the measured battery resistance increases, and the capacity retention rate increases.

Compared with Comparative Embodiment 1 and Comparative Embodiment 2, respectively, the lithium ion batteries of Embodiment 1 and Embodiment 3 have lower discharge DC resistance (DCR) and higher capacity retention rate. It may be seen that the present application can reduce the impedance of electrode/electrolyte interface, improve the cycle stability of the battery, and enhance the battery performance by in-situ generating a coating layer of lithium difluorophosphate on the surface of the positive electrode active substance.

The mass of lithium difluorophosphate added in Comparative Embodiment 3 is the same as the mass of lithium difluorophosphate generated in Embodiment 2, but compared with Comparative Embodiment 3, the lithium ion battery of Embodiment 2 has a lower discharge DC resistance (DCR) and a higher capacity retention rate. The reason is that the lithium difluorophosphate added in Comparative Embodiment 3 causes the viscosity of the electrolyte to increase, thereby reducing its effect of improving the performance of the battery. By generating a coating layer of lithium difluorophosphate in situ on the surface of the positive electrode active substance, the present application can increase the generated amount of lithium difluorophosphate, but does not cause an increase in the viscosity of the electrolyte, thereby effectively improving the cycle stability of the battery and enhancing the battery performance.

Compared with Comparative Embodiment 4, the lithium ion batteries of Embodiments 1 and 2 have lower discharge DC resistance (DCR) and higher capacity retention rate. The reason is that the usage amount of lithium carbonate in Comparative Embodiment 4 is too large, and unreacted lithium carbonate may exist, which leads to increased internal resistance of the battery and decreased cycle performance.

As may be seen from FIG.1, the ion chromatogram of the immersion solution of the positive electrode plate after high temperature standing in the present application shows an obvious characteristic peak at a retention time of 7 to 9 min, which is the characteristic peak of lithium difluorophosphate, and the peak height in FIG. 1 is 46 µS /cm, indicating that lithium difluorophosphate is generated. The peak intensity of the characteristic peak of lithium difluorophosphate in the present application may be 10 to 400 µS /cm.

## Claims

1. A positive electrode material applied in a battery, wherein the battery comprises an electrolyte, wherein the electrolyte comprises lithium hexafluorophosphate, and the positive electrode material comprises a positive electrode active substance and lithium carbonate, wherein the lithium carbonate is coated on a surface of the positive electrode active substance, and a mass ratio of the positive electrode active substance to the lithium carbonate is 1:(0.001-0.03).

2. The positive electrode material according to claim 1, wherein a surface basicity of the positive electrode material is 80 µmol/g ~ 2000 µmol/g; and/or
a volume fraction of particles with an average particle size of 0.1 µm - 0.3 µm in the lithium carbonate is at least 40%.

3. A preparation method for a positive electrode material, wherein the positive electrode material is applied in a battery, wherein the battery comprises an electrolyte, wherein the electrolyte comprises lithium hexafluorophosphate, and the preparation method comprises the following steps:
providing a positive electrode active substance and lithium carbonate, and coating the lithium carbonate on a surface of the positive electrode active substance to obtain the positive electrode material.

4. The preparation method for the positive electrode material according to claim 3, wherein the coating the lithium carbonate on the surface of the positive electrode active substance comprises:
ball-milling the lithium carbonate and the positive electrode active substance.

5. The preparation method for the positive electrode material according to claim 4, wherein a time for ball milling is 2h-8h, a rotation speed is 60r/min-120r/min; and/or
the ball milling is performed under an environmental condition where a dew point temperature is ≤ -50 °C.

6. A positive electrode slurry applied in a battery, wherein the battery comprises an electrolyte, the electrolyte comprises lithium hexafluorophosphate, and the positive electrode slurry comprises:
the positive electrode material as claimed in claim 1 or 2, or the positive material prepared by the preparation method for a positive electrode material as claimed in any one of claims 3 to 5, and a binder and a conductive agent.

7. The positive electrode slurry according to claim 6, wherein the positive electrode slurry further comprises a dispersant, and a mass percentage of the positive electrode material to the binder to the conductive agent to the dispersant is (94%-98%): (0.8%-5%): (0.5%-5%): (0.1%-0.5%).

8. A positive electrode plate applied in a battery, wherein the battery comprises an electrolyte, wherein the electrolyte comprises lithium hexafluorophosphate, and comprises the positive electrode slurry as claimed in claim 6 or 7.

9. A lithium ion battery, comprising: the positive electrode plate as claimed in claim 8 and an electrolyte, wherein the electrolyte comprises lithium hexafluorophosphate and an organic solvent.

10. The lithium ion battery according to claim 9, wherein a molar ratio of the lithium hexafluorophosphate to the lithium carbonate is 1: (0.001-0.1).

11. A preparation method for a lithium ion battery, comprising the following steps:
providing a lithium ion battery preform and an electrolyte, wherein the lithium ion battery preform comprises a packaged negative electrode plate, the positive electrode plate as claimed in claim 8, a separator and a battery shell,
injecting the electrolyte into the lithium ion battery preform to obtain the lithium ion battery after standing, the electrolyte comprises lithium hexafluorophosphate and an organic solvent.

12. The preparation method for a lithium ion battery according to claim 11, wherein a temperature for the standing is 40°C-80°C, and a time for the standing is 12 h - 96 h.
